# EUROPÄISCHE PATENTSCHRIFT

(11) **EP 1 223 117 B1**
(45) Veröffentlichungstag und Bekanntmachung des Hinweises auf die Patenterteilung: **15.10.2003**
(21) Anmeldenummer: 02000543.5
(22) Anmeldetag: 09.01.2002
(51) Int. Cl.: B65D 88/72, F16K 31/363

(54) **Vorrichtung zum stossartigen Ausblasen von Druckluft zur Beseitigung von Materialanbackungen oder -aufstauungen**
Device for an impulsed blowing of compressed air in order to remove caked or accumulated Material
Dispositif de type canon à air comprimé pour éliminer les amas de matériau

(30) Priorität: 11.01.2001 DE 10101042
(43) Veröffentlichungstag der Anmeldung: 17.07.2002
(73) Patentinhaber: Agrilux Beteiligungs GmbH, 60311 Frankfurt am Main (DE)
(72) Erfinder: Leibling, Udo, 55411 Bingen (DE)
(74) Vertreter: GROSSE BOCKHORNI SCHUMACHER

(56) Entgegenhaltungen:
- WO-A-97/43195

## Beschreibung

Die Erfindung betrifft eine Vorrichtung gemäß dem Oberbegriff des Patentanspruches 1.

Derartige Vorrichtungen - auch Luftstoßvorrichtungen genannt - die in der Lage sind, Druckluft gesteuert stoßartig auszublasen, um entsprechend starke Stoßkräfte zu erzeugen, werden zur Beseitigung von Materialanbackungen oder Materialaufstauungen von Schüttgütern in Bunkern, Silos, Reaktionsbehältern und dgl. verwendet, allem voran in der Zementindustrie. Diese Abblasvorrichtungen basieren auf dem Prinzip, dass in einem Speicherbehälter gespeicherte Druckluft schlagartig über eine Ausblasöffnung abgeblasen wird. Die Steuerung des Abblasvorganges erfolgt in aller Regel durch ein Schnellentlüftungsventil, das innerhalb des Speicherbehälters oder außerhalb des Speicherbehälters angeordnet sein kann. Derartige Schnellentlüftungsventile besitzen einen in einem Zylinder geführten Kolben, der in seiner Schließstellung die Ausblasöffnung der Luftstoßvorrichtung verschließt. Wird der Kolbenvorraum des Schnellentlüftungsventiles entlüftet, so hebt der nun nur noch einseitig vom Innendruck des Speicherbehälters beaufschlagte Kolben innerhalb von Sekundenbruchteilen von der Ausblasöffnung ab, so dass die Druckluft aus dem Speicherbehälter über die nunmehr freie Ausblasöffnung schlagartig entweichen und eventuell vorhandene Materialanbackungen absprengen kann. Das Ventil kann jederzeit wieder geschlossen werden, indem der Kolbenvorraum wieder mit Druckluft beaufschlagt und der Kolben dadurch wieder in seine Schließstellung zurückgedrückt wird.

Um den Kolben wunschgemäß steuern und halten zu können, ist der Kolbenvorraum gegenüber dem Speicherbehälter praktisch leckagefrei abgedichtet und über ein beliebig ansteuerbares Ventil mit Druckluft - separat vom Speicherbehälter - beaufschlagt, wodurch der Schließ- und Haltevorgang zwangsgesteuert werden kann. Um den Kolbenvorraum gegenüber dem Speicherbehälter abzudichten, ist der Kolben gewöhnlich mit ringförmig geschlossenen Dichtungen ausgerüstet, die in entsprechenden Nuten des Kolbens gefangen sind. Die Montage dieser Dichtungen gestaltet sich aufwendig. Sie müssen entweder bei der Montage so weit gedehnt werden, dass sie bis zu einem Einschnappen in die für sie vorgesehene Dichtungsnut über den äußeren Umfang des Kolbens hinweggeschoben werden können - was in der Praxis nicht in befriedigender Weise möglich ist. Alternativ muss der Kolben im Bereich der die Dichtung haltenden Nut mehrteilig ausgeführt werden, so dass die Dichtungen vor dem Zusammenbau des Kolbens zwischen die einzelnen Teile des Kolbens eingelegt werden können. Eine solche, aufwendige Konstruktion ist beispielsweise aus der Anmeldung WO 97/43195 bekannt.

Das bisher bekannt gewordene Halten der Dichtungen am Kolben hat weitere Nachteile. Die innere Oberfläche des den Kolben führenden Zylinders muss als Gleitfläche für die Dichtungen zwingend eine fein bearbeitete Oberfläche mit geringer Rautiefe aufweisen. Dies um den Gleitverschleiß an den Dichtungen so gering wie möglich zu halten. In diesem Zusammenhang tritt das Problem auf, dass die fein bearbeitete Oberfläche aufgrund ihrer Funktion und Bearbeitung (insbesondere bei vorangegangener schleifender Bearbeitung) in besonderem Maße korrosionsempfindlich ist. Dies zumal deshalb, weil die hier in Rede stehenden Luftstoßgeräte häufig in korrosiver, beispielsweise schwefelbelasteter, saurer oder alkalischer Umgebung eingesetzt werden. Nicht zuletzt um solcherlei Schwierigkeiten zu vermeiden, sieht die aus der WO 97/43195 bekannt gewordene Konstruktion vor, den Kolben in einem Rohr aus Chromnickelstahl zu führen, der - handelsüblich z. B. als V2a oder V4a - bekanntlich eine hohe Korrosionsbeständigkeit besitzt. Da es sich verbietet das gesamte Ventilgehäuse aus einem schlecht zu zerspanenden und überdies teuren Chromnickelstahl zu fertigen, muss der Zylinder dort als ein separates Bauteil in das Ventilgehäuse eingesetzt werden - was einen entsprechenden Aufwand bedingt.

Aufgabe der Erfindung ist es, eine Luftstoßvorrichtung der gattungsgemäßen Art so weiter zu bilden, dass unter Beibehaltung aller Vorteile, also schlagartige Druckluftausblasung, der Herstellungs- und Wartungsaufwand der Ventileinheit verringert wird.

Diese Aufgabe wird erfindungsgemäß durch die im kennzeichnenden Teil des Anspruches 1 enthaltenen Merkmale gelöst. Zweckmäßige Weiterbildungen der Erfindung ergeben sich durch die Merkmale aus den Unteransprüchen.

Nach Maßgabe der Erfindung kann das Ventilgehäuse unmittelbar als Zylinder und damit als Führungsfläche für den Kolben verwendet werden, wobei es insbesondere zweckmäßig ist, dass eingespreizte oder in sonst einer Weise darin angeordnete Ringe die Dicht- und Führungsfunktion für den Kolben übernehmen. Damit entfällt eine aufwendige Bearbeitung auf Seiten des Führungsdurchmessers des Kolbens, insbesondere die Notwendigkeit eine separate Zylinderhülse mit spezieller Behandlung im Ventilgehäuse aufzunehmen. Demnach entfällt eine gesonderte Bearbeitung des Gehäuses oder gar das aufwendige Einsetzen einer Zylinderbüchse völlig. Vielmehr ist lediglich der Kolben einer Feinbearbeitung zu unterziehen. Im Bedarfsfalls kann der Kolben problemlos aus einem korrosionsbeständigen Werkstoff gefertigt oder besonderen Korrosionsschutzmaßnahmen unterzogen werden, ohne dass konstruktive Maßnahmen am Ventilgehäuse erforderlich wären.

In besonders zweckmäßiger Weise sind die Ringe in beabstandeter Anordnung zueinander vorgesehen, so dass sie als Führungsringe für den Kolben dienen können. Mindestens einer der Ringe ist hierbei zugleich als Dichtungsring ausgebildet. Dabei ist es zweckmäßig, wenn der Dichtungsring aus einem O-Ring aus einem hochtemperaturfesten Material und einem Teflon-Ring zusammengesetzt ist. Diese Ringe lassen sich einfach in den Zylinder einspreizen und halten dann unter Vorspannung innerhalb der entsprechenden Nuten im Zylinder des Ventilgehäuses. Es ergibt sich demnach eine sehr einfache Montage, die noch dadurch erleichtert wird, dass am stirnseitigen Ende des Gehäuses ein Deckel vorgesehen ist, nach dessen Abnahme die Zylinderausnehmung unmittelbar freiliegt.

Vorteilhafterweise wird der Kolben einstückig ausgeführt, was den Fertigungsund Montageaufwand und die Betriebssicherheit erhöht. Damit entfallen die Nachteile eines mehrteilig aufgebauten Kolbens aufgrund von Wärmedehnungen unter schlagartigen Belastungen, was zu einem Lösen der Verbindungsanordnung der mehreren Teile des Kolbens führen könnte. Zweckmäßigerweise ist der Kolben hohl ausgebildet, was in Verbindung mit der weiteren Maßnahme, einen Kolben aus Aluminium herzustellen, zu einer spürbaren Gewichtsverringerung führt. Dies wird noch dadurch begünstigt, wenn zugleich das Ventilgehäuse aus Leichtmetall, insbesondere Aluminium hergestellt ist. Sowohl Kolben wie auch Ventilgehäuse lassen sich leicht durch Guss herstellen.

Vorteilhafterweise wird in die Stirnseite des Kolbens ein Dichtungskörper eingelegt und über eine Schraubverbindung gehalten und zwar über eine wärmebeständige isolierende Zwischenlage. Dadurch wird auf einfache Art und Weise die Belastung des Dichtungselements und des Kolbens durch den Wärmezutritt von Seiten der Ausblasöffnung und die damit einhergehende Gefahr des Lockerns der Schraube vermindert.

Nachfolgend wird ein bevorzugtes Ausführungsbeispiel der Erfindung anhand der Zeichnungen beschrieben. Darin zeigen
- **Fig. 1**: einen Schnitt durch eine in Schließstellung sich befindliche Ventileinheit,
- **Fig. 2**: den selben Schnitt wie bei Fig. 1, jedoch unter Darstellung der Ventileinheit in geöffneter Stellung,
- **Fig. 3**: eine vergrößerte Darstellung der von der Ausblasöffnung abgewandten Stirnseite des Ventilgehäuses sowie
- **Fig. 4**: eine vergrößerte Darstellung des Kolbens in der geöffneten Stellung.

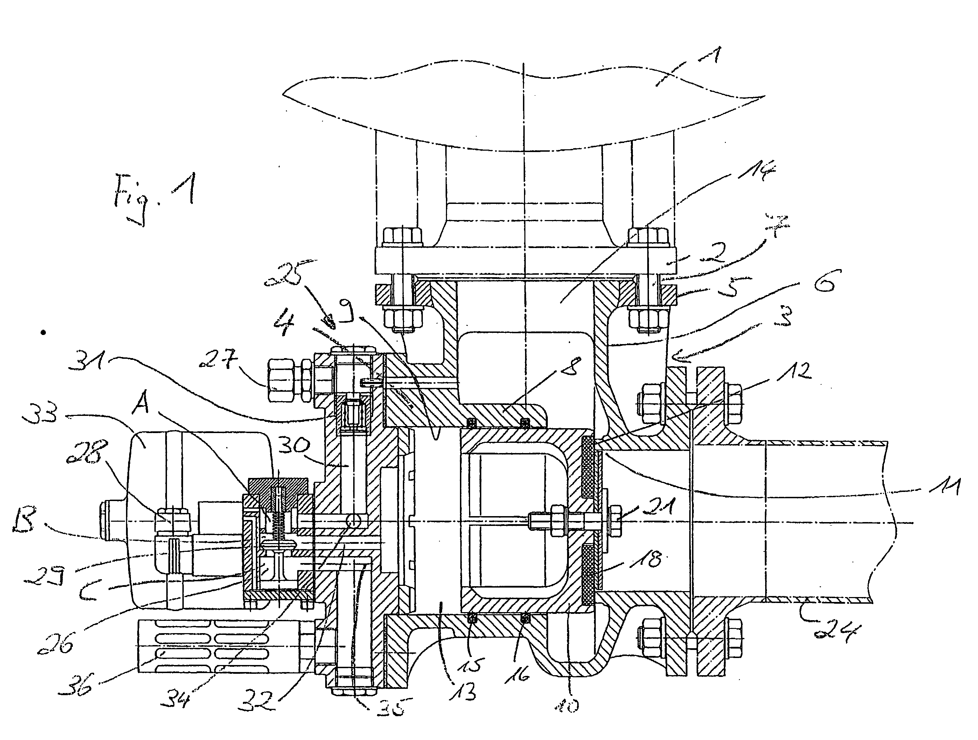

In Fig. 1 ist der nur teilweise und schematisch dargestellte Druckluft-Speicherbehälter mit dem Bezugszeichen 1 versehen. An diesem Speicherbehälter und zwar an seiner Außenseite ist ein flanschartiger Anschluss 2 zur Aufnahmen des allgemeinen mit 3 bezeichneten Schnellentlüftungsventils vorgesehen. Das mit 4 bezeichnete Ventilgehäuse ist als ein im wesentlicher T-förmiger Rohrstutzen ausgebildet und über einen Flansch 5 eines Rohrschenkels 6 mittels über den Umfang angeordneter Schraubbolzen 7 mit dem Flansch 2 verschraubt. Dadurch ist eine leichte Montage des Schnellentlüftungsventils an einem Druckluftspeicherbehälter ermöglicht.

Das Ventilgehäuse 4 weißt einen einstückig ausgebildeten Zylinder 8 auf, der eine zylindrische Mantelfläche 9 für einen darin geführten Kolben 10 bildet.

In der in Fig. 1 dargestellten Funktionsstellung ist die Ventileinheit geschlossen, da sich der Kolben 10 in einer Endstellung befindet, in welcher der Kolben mit seiner Stirnfläche die mit 11 bezeichnete Auslassöffnung des Ventilgehäuses schließt. Hierbei liegt der Kolben an einer mit 12 bezeichneten Dichtfläche des Ventilgehäuses an.

Der Kolben 10 ist in diese Endstellung durch Druckluft gedrückt, die sich in dem mit 13 bezeichneten Kolbenvorraum des Ventilgehäuses befindet. Die Abdichtung des Kolbenvorraums 13 gegenüber dem Druckluftspeicherbehälter 1 bzw. dem mit 14 bezeichneten speicheranschlussseitigen Vorraum erfolgt im dargestellten Ausführungsbeispiel durch zwei mit Abstand zueinander angeordneten Dicht- und Führungsringen 15 und 16, die in entsprechenden Nuten in der zylindrischen Mantelfläche 9 aufgenommen und gehalten sind. Zweckmäßigerweise sind diese Dicht- und Führungsringe 15, 16 durch O-Ringe aus hochtemperaturfestem Material und Teflonringen aufgebaut. Deswegen kann die Montage der Ringe bequem vorgenommen werden. Die ein geringes Übermaß besitzenden, relativ wenig elastischen Dichtungen lassen sich soweit zusammendrücken, dass sie, leicht schräg gestellt, in den Zylinder eingeschoben und dann in Ihre entsprechenden Nuten in der Zylindermantelfläche eingespreizt werden können. Dadurch sind die Dichtungen zuverlässig gehalten.

Dabei übernehmen die Dichtungsringe vorzugsweise auch Führungsfunktion für den Kolben, was zur Folge hat, dass die Zylindermantelfläche nicht als Kolbenführungsfläche fein bearbeitet werden muss. Auch verringern sich dadurch erheblich die Herstellkosten. Hierbei ist es möglich, dass nur einer der beiden mit Abstand angeordneten Ringe als Dichtring und der andere als Führungsring ausgebildet ist. Zweckmäßig ist jedoch die Ausbildung beider Ringe als Dichtund Führungsringe, zumal dann gleiche Dichtringe verwendet werden können. Dies ist wiederum für die Montage vorteilhaft, da der Monteur nicht darauf achten muss, welcher Dicht- oder Führungsring in welche Nut eingelegt werden muss.

Das Ventilgehäuse 4, welches zweckmäßiger Weise als Gussteil hergestellt ist, kann nicht zuletzt für diese Ausbildung aus Aluminium, also aus Leichtmetall, hergestellt werden, was wesentlich das Gewicht der außenliegenden Ventileinheit herabsetzt. Selbstverständlich ist es möglich, die zylindrische Mantelfläche zur Verbesserung des Korrosionsschutzes zusätzlich zu beschichten, insbesondere zu passivieren.

Auch der Kolben ist zweckmäßigerweise aus Aluminium hergestellt und im dargestellten Ausführungsbeispiel als Hohlkolben ausgebildet, wobei die geschlossene Stirnfläche des Kolbens der kreiszylinderförmigen Auslassöffnung 11 zugeordnet ist. Durch die Ausbildung des Kolbens als Hohlbauteil wird zugleich das Gewicht der außenliegenden Ventileinheit herabgesetzt.

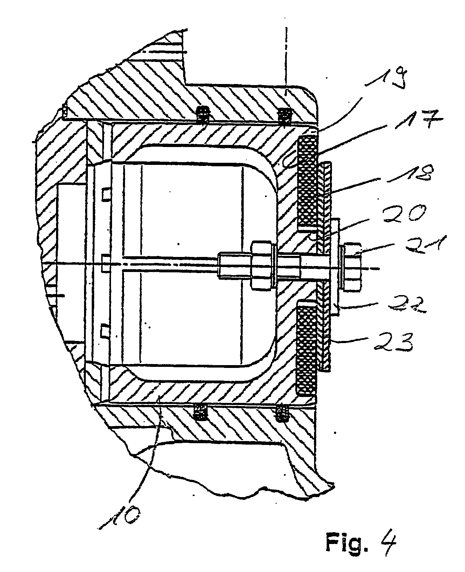

Wie insbesondere aus Fig. 4 hervorgeht, weist der einteilig bzw. einstückig ausgebildete Kolben 10 an seiner Stirnfläche eine vergleichsweise breite Ringnut 17 auf, in welcher ein geeignetes Dichtungselement, hier eine Dichtungsscheibe 18 aus einem warmfesten Elastomer eingelegt ist. Die Ringnut 17 hat bei 19 eine Begrenzung zum Außenumfang des Kolbens hin. Dadurch wird verhindert, dass die Dichtungsscheibe 18, die im Laufe der Zeit unter doch hohen Temperaturbeanspruchungen und den wiederkehrenden Schlägen beim Schließen des Ventils zwangsläufig eine Breitung bzw. eine Verschiebung in radial auswärtiger Richtung erfährt, über die außenseitige Kolbenstirnfläche hinausragt und infolgedessen beim Abheben des Kolbens von der Zylinderwand abgeschert wird. Die Dichtungsscheibe 18 ist hierbei so dimensioniert, dass sie im Hinblick auf eine radial einwärtige Nutwange 20 des Kolbens ein gewisses Spiel hat. Dadurch wird verhindert, dass die Dichtung dreiseitig eingespannt und daher weitestgehend starr ist. Die Dichtung kann also unter den hohen Temperaturbelastungen arbeiten. Die Halterung der auswechselbaren Dichtungsscheibe 18 erfolgt in einfacher Weise über eine mit 21 bezeichnete zentrisch angeordnete Schraubverbindung über eine Unterlegscheibe 22, die auf eine Stütz- und Isolierscheibe 23 drückt. Die innenliegende Isolierscheibe stützt sich hierbei unmittelbar auf dem Kolben ab. Dadurch kann die Schraubverbindung mit einem hohen Drehmoment angezogen werden, um sie gegen ein Lösen zu sichern. Die Isolierscheibe hemmt die Wärmeübertragung von der Reaktionskammer, in welche die Düse 24 (Fig. 1) mündet, auf den Kolben. Der Einfachheit halber kann hier als Isolierscheibe ggf. eine sog. IT-Dichtung oder -Scheibe verwendet werden, wie sie in der Versorgungstechnik zur Abdichtung von geschraubten Flanschverbindungen an Heißwasser- oder Dampfleitungen standardmäßig zum Einsatz kommt und in nahezu beliebigen Größen zur Verfügung steht.

Bei der hier dargestellten Ausführungsform ist das Entlüftungsventil zur Zwangssteuerung des Kolbens 10 in einem mit 25 bezeichneten Deckel aufgenommen, welcher den Zylinder 8 auf der von der Auslassöffnung 11 abgewandten Seite verschließt. In der in Fig. 1 dargestellten Stellung ist hierbei über entsprechende Ventilsteuerung der Kolbenvorraum 13 über entsprechende Leitungen im Deckel, die über eine Ventilkammer 26 führen mit einem Druckluftversorgungsanschluss 27 verbunden. Dadurch wird in Folge der Druckluftzufuhr und des damit im Kolbenvorraum 13 aufgebauten Drucks der Kolben in seiner Stellung gehalten.

Fig. 1 zeigt in weiteren Einzelheiten, das im Deckel 25 untergebrachte bzw. angeordnete elektrisch betätigte 3-Wegeventil, den sogenannten Würgnippel, über den die elektrische Anschluss- und Versorgungsleitung 28 nach außen geführt wird. Gemäß Fig. 1 ist das 3-Wegeventil so geschaltet, dass ein Ventilkörper 29 die beiden Kammern A und B miteinander verbindet. Von der Kammer A zum Druckluftversorgungsanschluss 27 führt eine durchgehende, abgewinkelte Versorgungsbohrung 30, in der ein Rückschlagventil 31 angeordnet ist, welches nur eine Druckluftströmung vom Druckluftversorgungsanschluss 27 zur Kammer, aber nicht in umgekehrter Richtung gestattet. Die Kammer B ist über eine weitere konzentrische Bohrung 32 mit in dem Kolbenvorraum 13 verbunden.

Um die Druckversorgung des Kolbenvorraumes 13 auch bei einem etwaigen Druckabfall der Druckversorgungsleitung hinreichend mit Druck beaufschlagen zu können, d. h. um das Ventil auch bei einem Druckaus- oder -abfall wieder zu schließen und nötigen Falls auch verschlossen halten zu können, kann ein Druckspeicher vorgesehen sein, hier in Form eines zylindrischen und auf den Deckel aufgesetzten Kessels 33. Dieser Kessel 33 steht mit der Leitung zwischen dem Druckluftversorgungsanschluss und der Ventilkammer A in Verbindung - in der Fig. 1 sieht man die mit der Bezugsziffer 34 bezeichnete Mündung der Abzweigung zum Druckspeicher 33. Fällt der im Anschluss zur Druckluftversorgungsleitung 27 stehende Druck ab, so schließt das Rückschlagventil 31 und der Druck im Kolbenvorraum 13 wird dann durch den Druck vom Druckspeicher 33 sichergestellt bzw. wieder aufgebaut.

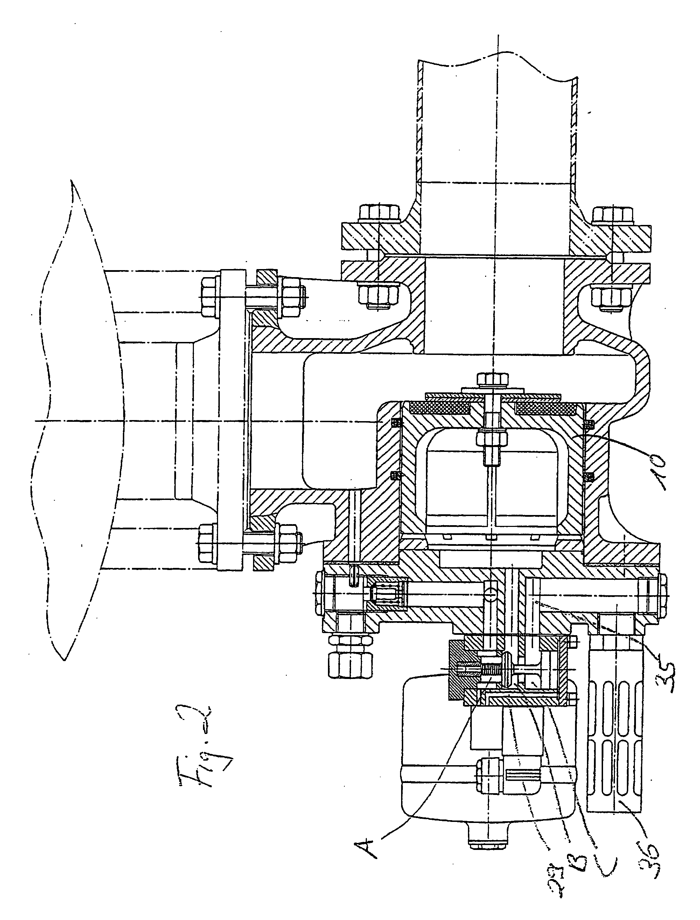

Zum schlagartigen Ablassen des Druckluftspeicherbehälters 1 wird der Kolben 10 in die in Fig. 2 gezeigte Stellung gebracht. Hierzu wird der Kolbenvorraum 13 in die Umgebung entlüftet, woraufhin der Druck im Kolbenvorraum 13 zusammenbricht und der Kolben 10, durch den an der über seinen stirnseitigen Sitz hinausragenden Ringfläche anliegenden Innendruck schlagartig vom Sitz abgehoben wird.

Die Entlüftung des Kolbenvorraums 13 erfolgt dadurch, dass der mit Bezugszeichen 29 bezeichnete Ventilkörper des 3-Wegeventiles in eine solche Stellung gebracht wird, dass die Ventilkammer A verschlossen und die Ventilkammern B und C miteinander verbunden werden. Die Ventilkammer C ist über eine zweimal um 90 ° abknickende Bohrung 35 mit einem Filter-Schalldämpfer 36 verbunden, über den der in der Ventilkammer C anstehende Druck abgeblasen werden kann.

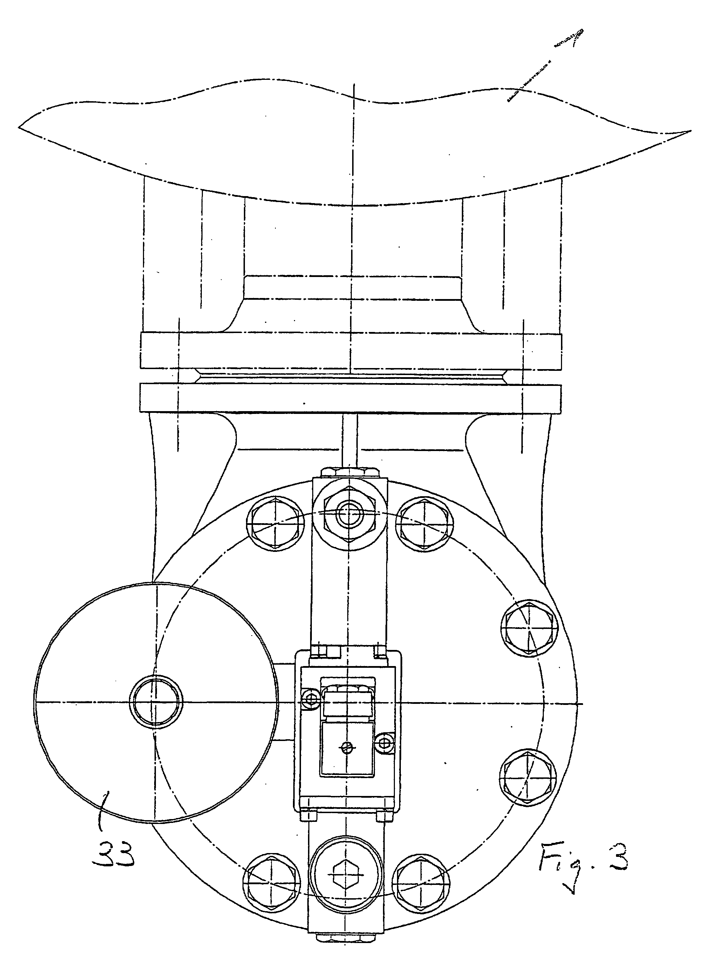

Bei der Ausführungsform nach den Fig. 1 bis 3 ist der Zylinderkopfdeckel 25 so gestaltet, dass er sämtliche druckluftseitig erforderlichen Komponenten enthält und zwischen ihnen, dem Druckluftversorgungsanschluss 27 und dem Kolbenvorraum 13 die erforderliche strömungstechnische Verbindung herstellt.

## Patentansprüche

1. Vorrichtung zum stoßartigen Ausblasen von Druckluft zur Beseitigung von Materialanbackungen oder -aufstauungen in verfahrenstechnischen Behältern, Bunkern, Silos, Reaktionskammern oder dergleichen, mit einem Druckluftspeicherbehälter (1), einer Auslassöffnung (11) für das stoßartige Ausblasen von Druckluft aus dem Speicherbehälter (1) und mit einem Schnellentlüftungsventil (3) mit einem Ventilgehäuse (4) das im oder am Speicherbehälter (1) angeordnet ist und einen in einem Zylinder (6) geführten Kolben (10) aufweist, der in einer Endstellung vorzugsweise durch im Kolbenvorraum (13) des Ventilgehäuses gefangene Druckluft gegen die Dichtfläche (12) der Auslassöffnung (11) gedrückt wird und diese schließt und bei Entlüftung des Kolbenvorraums (13) schlagartig von der Auslassöffnung (11) abgehoben wird, so dass die Druckluft aus dem Speicherbehälter (1) stoßartig über die Auslassöffnung (11) ausgeblasen wird, **dadurch gekennzeichnet, dass** der Kolbenvorraum (13) gegenüber dem Druckluftspeicherbehälter (1) und gegebenenfalls dessen Vorraum durch mindestens eine am Zylinder (8) gehaltene Dichtung (15, 16) abgedichtet ist.

2. Vorrichtung nach Anspruch 1, **dadurch gekennzeichnet, dass** im Gehäusezylinder (8) zumindest zwei Ringe (15, 16) mit Abstand zueinander zur Führung des Kolbens (10) angeordnet sind, von denen wenigstens einer der Ringe als Dichtring ausgebildet ist.

3. Vorrichtung nach Anspruch 1 oder 2, **dadurch gekennzeichnet, dass** die Dichtung einen Teflonring aufweist.

4. Vorrichtung nach einem der vorhergehenden Ansprüche, **dadurch gekennzeichnet, dass** die Dichtung einen O-Ring aus hochtemperaturbeständigen Material und einen Teflonring aufweist.

5. Vorrichtung nach einem der vorhergehenden Ansprüche, **dadurch gekennzeichnet, dass** das Gehäuse und/oder der Kolben aus Leichtmetall, vorzugsweise aus Aluminium hergestellt sind.

6. Vorrichtung nach einem der vorhergehenden Ansprüche, **dadurch gekennzeichnet, dass** der Kolben (10) einteilig ausgebildet ist.

7. Vorrichtung nach einem der vorhergehenden Ansprüche, **dadurch gekennzeichnet, dass** der Kolben (10) als Hohlkolben ausgebildet ist, wobei die geschlossene Kolbenstirnfläche der Auslassöffnung (11) zugewendet ist.

8. Vorrichtung nach einem der vorhergehenden Ansprüche, **dadurch gekennzeichnet, dass** der Zylinder (8) einstückiger Bestandteil des Ventilgehäuses (4) ist.

9. Vorrichtung nach einem der vorhergehenden Ansprüche, **dadurch gekennzeichnet, dass** der Kolben (10) an seiner der Auslassöffnung (11) zugewandten Stirnseite eine Ausnehmung (17) aufweist, in welcher ein Dichtelement (18) abnehmbar eingelegt und gehalten ist, das bei geschlossenem Ventil die Auslassöffnung (11) abdichtet.

10. Vorrichtung nach einem der vorhergehenden Ansprüche, **dadurch gekennzeichnet, dass** die Ausnehmung als Ringnut (17) und das Dichtelement als Dichtscheibe (18) ausgebildet ist, welches mittels Schraubverbindung vorzugsweise über eine wärmebeständige, isolierende Zwischenlage (23) auf der Kolbenstirnseite gehalten ist.

11. Vorrichtung nach einem der vorhergehenden Ansprüche, **dadurch gekennzeichnet, dass** der Kolbenvorraum (13) der Ventileinheit getrennt von der Druckluftzufuhr zum Speicherbehälter (1) mit Druckluft beaufschlagbar ist.

## Claims

1. Apparatus for impulsively discharging compressed air to remove caked or accumulated material in technical process containers, bunkers, silos, reaction chambers or the like including a compressed air storage container (1), an outlet opening (11) for the impulsive discharge of compressed air from the storage container (1) and including a rapid venting valve (3) with a valve housing (4) which is arranged in or on the storage container (1) and has a piston (10), which is guided in a cylinder (6) and is forced in an end position, preferably by compressed air trapped in the cylinder space (13), against the sealing surface (12) of the outlet opening (11) and closes it and is lifted abruptly away from the outlet opening (11), when the cylinder space is vented, so that the compressed air is discharged impulsively out of the storage container (1) via the outlet opening (11), **characterised in that** the cylinder space (13) is sealed with respect to the compressed air storage container (1) and optionally its pre-chamber by at least one seal (15, 16) mounted on the cylinder (8).

2. Apparatus as claimed in Claim 1, **characterised in that** arranged in the housing cylinder (8) at a distance from one another in order to guide the piston (10) there are at least two rings (15, 16) of which at least one of the rings constitutes a sealing ring.

3. Apparatus as claimed in Claim 1 or 2, **characterised in that** the seal has a Teflon ring.

4. Apparatus as claimed in one of the preceding claims, **characterised in that** the seal has an O-ring of high temperature-resistant material and a Teflon ring.

5. Apparatus as claimed in one of the preceding claims, **characterised in that** the housing and/or the piston are made of light metal, preferably aluminium.

6. Apparatus as claimed in one of the preceding claims, **characterised in that** the piston (10) is of one-part construction.

7. Apparatus as claimed in one of the preceding claims, **characterised in that** the piston (10) constitutes a hollow piston, the closed piston end surface being directed towards the outlet opening (11).

8. Apparatus as claimed in one of the preceding claims, **characterised in that** the cylinder (8) is an integral component of the valve housing (4).

9. Apparatus as claimed in one of the preceding claims, **characterised in that**, on its end surface directed towards the outlet opening (11), the piston (10) has a recess (17), in which a sealing element (18) is removably inserted and retained, which closes the outlet opening (11), when the valve is closed.

10. Apparatus as claimed in one of the preceding claims, **characterised in that** the recess constitutes an annular groove (17) and the sealing element constitutes a sealing disc (18), which is mounted on the end surface of the piston by means of screw connections, preferably via a heat-resistant, insulating intermediate layer (23).

11. Apparatus as claimed in one of the preceding claims, **characterised in that** the cylinder space (13) of the valve unit may be acted on by compressed air separately from the compressed air supply to the storage container (1).

## Revendications

1. Dispositif de soufflage intermittent d'air comprimé destiné à empêcher le collage ou l'accumulation de matières dans des réservoirs, des trémies, des silos, des chambres de réaction ou analogues pour procédés industriels, comprenant un réservoir d'air comprimé (1), un orifice de soufflage (11) pour le soufflage intermittent d'air comprimé hors du réservoir (1) et une soupape d'échappement rapide (3), pourvue d'un logement de soupape (4), qui est disposée dans le réservoir (1) ou sur le réservoir (1) et qui présente un piston (10) guidé dans un cylindre (6) qui, dans une position finale, est pressé, de préférence, par de l'air comprimé piégé dans l'antichambre du piston (13) du logement de soupape contre la surface d'étanchéité (12) de l'orifice de soufflage (11) et qui ferme celui-ci et qui, lorsque l'antichambre du piston (13) est purgée, est soulevé subitement de l'orifice de soufflage (11), de sorte que l'air comprimé est subitement expulsé hors du réservoir (1) par l'intermédiaire de l'orifice de soufflage (11), **caractérisé en ce que** l'antichambre du piston (13) est rendue étanche envers le réservoir d'air comprimé (1) et éventuellement envers l'antichambre de celui-ci au moyen d'au moins une garniture d'étanchéité (15, 16) disposée sur le cylindre (8).

2. Dispositif selon la revendication 1, **caractérisé en ce qu'**au moins deux joints (15, 16) sont disposés à distance l'un de l'autre dans le cylindre-logement (8) afin de guider le piston (10), au moins l'un d'entre eux se présentant sous la forme d'un joint d'étanchéité.

3. Dispositif selon la revendication 1 ou 2, **caractérisé en ce que** la garniture d'étanchéité présente un joint en téflon.

4. Dispositif selon l'une quelconque des revendications précédentes, **caractérisé en ce que** la garniture d'étanchéité présente un joint torique composé d'un matériau résistant aux hautes températures et un joint en téflon.

5. Dispositif selon l'une quelconque des revendications précédentes, **caractérisé en ce que** le logement et/ou le piston sont composés d'un métal léger, de préférence d'aluminium.

6. Dispositif selon l'une quelconque des revendications précédentes, **caractérisé en ce que** le piston (10) est composé d'une seule pièce.

7. Dispositif selon l'une quelconque des revendications précédentes, **caractérisé en ce que** le piston (10) se présente sous la forme d'un piston creux, dans lequel la surface frontale fermée du piston est orientée vers l'orifice de soufflage (11).

8. Dispositif selon l'une quelconque des revendications précédentes, **caractérisé en ce que** le cylindre (8) est un élément en une seule pièce du logement de soupape (4).

9. Dispositif selon l'une quelconque des revendications précédentes, **caractérisé en ce que** le piston (10) présente, sur sa surface frontale fermée orientée vers l'orifice de soufflage (11), un évidement (17), dans lequel un dispositif d'étanchéité (18) est disposé et maintenu de manière amovible, qui rend étanche l'orifice de soufflage (11) lorsque la soupape est fermée.

10. Dispositif selon l'une quelconque des revendications précédentes, **caractérisé en ce que** l'évidement se présente sous la forme d'une rainure annulaire et l'élément d'étanchéité sous la forme d'une rondelle d'étanchéité (18) qui est maintenue au moyen d'un assemblage par boulons, de préférence par-dessus une couche intermédiaire (23) stable à la chaleur et isolante, sur la surface frontale du piston.

11. Dispositif selon l'une quelconque des revendications précédentes, **caractérisé en ce que** l'antichambre du piston (13) de l'unité de soupape peut être chargée d'air comprimé indépendamment de l'alimentation en air comprimé du réservoir (1).
